(19) Europäisches Patentamt
European Patent Office
Office européen des brevets

(11) **EP 1 780 822 B1**

(12) **EUROPEAN PATENT SPECIFICATION**

(45) Date of publication and mention
of the grant of the patent:
**18.01.2012 Bulletin 2012/03**

(51) Int Cl.:
*H01M 8/10* (2006.01)   *H01M 8/02* (2006.01)

(21) Application number: **06301097.9**

(22) Date of filing: **30.10.2006**

(54) **Gas diffusion electrode, membrane-electrode assembly, polymer electrolyte fuel cell, and methods for producing**

Gasdiffusionselektrode, Membranelektrodeanordnung, Polymerelektrolytbrennstoffzelle und Herstellungsverfahren

Electrode de diffusion de gaz, ensemble électrode-membrane, pile à combustible à électrolyte polymérique et procédés de fabrication

(84) Designated Contracting States:
**DE FR GB**

(30) Priority: **01.11.2005 JP 2005318323**
**28.12.2005 JP 2005376886**

(43) Date of publication of application:
**02.05.2007 Bulletin 2007/18**

(73) Proprietor: **Tomoegawa Co., Ltd.**
**Tokyo (JP)**

(72) Inventors:
• **Suzuki, Toshiyasu**
**Suruga-ku, Shizuoka-shi,**
**Shizuoka-ken (JP)**

• **Tanaka, Koushin**
**Suruga-ku, Shizuoka-shi,**
**Shizuoka-ken (JP)**

(74) Representative: **Vuillermoz, Bruno et al**
**Cabinet Laurent & Charras**
**"Le Contemporain"**
**50, Chemin de la Bruyère**
**69574 Dardilly Cédex (FR)**

(56) References cited:
**EP-A- 1 437 784      EP-A- 1 478 041**
**EP-A- 1 560 283      EP-A1- 1 574 598**
**WO-A-02/29836      WO-A-98/27606**
**US-A- 5 728 485      US-A1- 2002 051 903**
**US-A1- 2002 192 383      US-A1- 2003 091 891**
**US-A1- 2003 124 411      US-A1- 2004 131 768**
**US-A1- 2005 130 007**

## Description

TECHNICAL FIELD

The invention relates to gas diffusion electrodes, membrane-electrolyte assemblies, polymer electrolyte fuel cells, and methods for producing these.

BACKGROUND ART

Fuel cells are power systems that continuously supply fuel and oxidants, and extract the chemical energy from the electrochemical reaction as electrical power. Fuel cells that use this method of producing power through an electrochemical reaction use the reverse reaction of water electrolysis, that is, the mechanism by which hydrogen and oxygen bond to produce electrons and water, and in recent years fuel cells have garnered much attention because of their high efficiency and excellent environmental characteristics.

Fuel cells are categorized according to the type of the electrolyte, and are divided into phosphoric acid fuel cells, fused carbonate fuel cells, solid oxide fuel cells, alkaline fuel cells, and polymer electrolyte fuel cells. In recent years, particular attention has been given to polymer electrolyte fuel cells, which are advantageous because they can be activated at room temperature and have a very short activation time. The basic structure of the single cells making up polymer electrolyte fuel cells is arrived at by joining catalyst layers to both sides of a polymer electrolyte film, joining gas diffusion electrodes to the outside of the catalyst layers, and then disposing a separator outside the gas diffusion electrodes.

In such polymer electrolyte fuel cells, first the hydrogen that is supplied toward the fuel electrode side is guided to the gas diffusion electrode through a gas duct in the separator. The hydrogen is then uniformly diffused to the gas diffusion electrode, after which it is guided toward the catalyst layer on the fuel electrode side and split into hydrogen ions and electrons by the catalyst, such as platinum. The hydrogen ions pass through the electrolyte film and are guided to the catalyst layer of the oxygen electrode on the opposite side of the electrolyte film. On the other hand, the electrons that are generated on the fuel electrode side pass through a negatively charged circuit as they are guided to the gas diffusion layer on the oxygen electrode side, and then they are drawn to the catalyst layer on the oxygen electrode side. At the same time, oxygen that has been guided from the separator on the oxygen electrode side passes through the gas diffusion electrode on the oxygen electrode side and arrives at the catalyst layer on the oxygen electrode side. The oxygen, electrons, and hydrogen ions together create water, completing the power generation cycle. It should be noted that examples of fuels other than hydrogen that may be used in polymer electrolyte fuel cells include alcohols such as methanol and ethanol, and these also can be used directly as fuel.

Conventionally, carbon paper or carbon cloth made from carbon fiber has been used as the gas diffusion layer in polymer electrolyte fuel cells. Carbon paper and carbon cloth are made water resistant by applying a water-repelling binder such as polytetrafluoroethylene (PTFE) on its surface or in its voids, for the purpose of preventing flooding by the humidity water and the water that is created by the electrode reaction at the cathode during fuel cell operation. However, since carbon paper and carbon cloth have holes with an extremely large diameter, a sufficient water-repelling effect could not be obtained, and water accumulated in these holes.

To fix this problem, a gas diffusion electrode that includes a porous resin having a conductive filler made of carbon, for example, on carbon paper has been proposed (for example, see Patent Document 1).

However, there was the problem that fabricating such a gas diffusion electrode, which involves applying a paint that is made of a porous resin that includes conductive filler made from carbon, etc., directly to the carbon paper surface, and then impregnation, solvent extraction, and drying, has the effect of blocking the voids in the carbon paper and as a result there is a drop in the gas permeability into these voids, and this lowers cell performance.

There also has been proposed the formation of a water-repelling layer by applying a mixture of carbon black and PTFE on stainless steel mesh (for example, see Patent Document 2).

However, there was the problem that the product formed by applying this mixture blocks the voids in the stainless steel mesh, and as a result there is a drop in the gas permeability into these voids, and this lowers cell performance. Further, there is also the problem that when manufacturing the fuel cell, the voids in the porous film of the gas diffusion electrode are flattened in the process of applying pressure to the gas diffusion electrode in order to bring die gas diffusion electrode into close contact with the electrolyte and to adhere it using an adhesive, and this hinders the elimination of gas and water.

There has also been proposed the use of graphite as the larger carbon particles and the use of carbon particles that have been coated with fluororesin so as to be made water-repelling as the smaller diameter carbon particles, of a gas diffusion layer obtained by mixing at least two types of carbon particles with different distribution peaks in their particle diameters (for example, see Patent Document 3).

However, there was the problem that the diffusion layer formed in this manner has low strength and does not have a sufficient water-repelling ability.

Patent Document 1: Japanese Unexamined Patent Application, First Publication No. 2003-303595
Patent Document 2: Japanese Unexamined Patent Application, First Publication No. 2000-058072
Patent Document 3: Japanese Unexamined Patent Application, First Publication No. 2001-057215

Document WO98/27606 discloses a porous electrode substrate for an electrochemical fuel cell, which comprises a preformed macroporous webs having pores or voids. Said voids contain electrically conductive material.
Document EP 1 478 041 discloses a fuel cell comprising an anode which comprises a gas diffusion layer constituted by filling a conductive porous support which is coated with a hydrophilic material with a conductive powder, and a catalyst layer.
The present invention was arrived at in order to fix the foregoing problems. That is, a first object of the invention is to provide a gas diffusion electrode that favorably maintains the ability of gas to diffuse through the porous film and thus can favorably retain cell properties. Another object of the invention is to provide a membrane-electrolyte assembly, and a simple method of producing the same, that uses the above gas diffusion electrode. A further object of the invention is to provide a polymer electrolyte fuel cell that uses the gas diffusion electrode and that has excellent cell performance.
The other object of the invention is to provide a gas diffusion electrode, a membrane-electrolyte assembly, a polymer electrolyte fuel cell, and methods for producing these, that favorably retains its gas permeability and also possesses mechanical strength, and thus can favorably retain cell properties.

DISCLOSURE OF INVENTION

The present invention can solve the foregoing problems through the following technical configurations.

(1) A gas diffusion electrode comprising:

a fluororesin film in which at least carbon material has been dispersed;
wherein the fluororesin has a plurality of through-holes provided by irradiating a laser on the surface of the fluororesin film or by puncturing the fluororesin film with mechanical means such as a fine needle or drill.

(2) The gas diffusion electrode according to claim (1),
wherein the fluororesin film comprises an olefin fluoride-based resin.
(3) The gas diffusion electrode according to claim (1),
wherein the carbon material comprises at least one of a particulate carbon material and a fibrous carbon material.
(4) The gas diffusion electrode according to claim (3),
wherein the particulate carbon material is carbon black.
(5) The gas diffusion electrode according to claim (4),
wherein the carbon black is acetylene black.
(6) The gas diffusion electrode according to either claim (1) or (2),
wherein an rate of hole area of the fluororesin film is in a range of 20% to 95%.
(7) The gas diffusion electrode according to claim (1) or (2),
wherein a density of the fluororesin film is in a range of 0.10 to 1.55 g/cm$^3$.
(8) The gas diffusion electrode according to either claim (1) or (2),
wherein a void content of the fluororesin film is in a range of 20% to 95%.
(9) The gas diffusion electrode according to either claim (1) or (2),
wherein the fluororesin film comprises hydrophilic inorganic microparticles or organic microparticles as filler.
(10) The gas diffusion electrode according to either claim (1) or (2),
wherein a weight ratio of fluororesin and carbon material in the fluororesin film is 1/3 to 10 parts by weight carbon material to one part by weight fluororesin.
(11) A gas diffusion electrode according to claim (1) or (2), which further comprises a sheet-shaped conductive porous body on the fluororesin film.
(12) A membrane-electrolyte assembly for a polymer electrolyte fuel cell, comprising:

the gas diffusion electrode according to claim (1) or (2);
a polymer electrolyte film; and
a catalyst layer,
wherein the gas diffusion electrode is provided onto both surfaces of the polymer electrolyte film, with the catalyst layer interposed between each gas diffusion electrode and the polymer electrolyte film.

(13) A polymer electrolyte fuel cell comprising a separator and the membrane-electrolyte assembly according to claim (12).

(14) A method of producing a gas diffusion electrode, comprising:

a process of forming a fluororesin film by drying a solution in which carbon material is dispersed in a fluororesin solution; and

a process of providing through-holes in the fluororesin film by irradiating a laser on the surface of the fluororesin film or by puncturing the fluororesin film with mechanical means such as a fine needle or drill.

(15) A method of producing a membrane-electrolyte assembly, comprising:

the process of producing a gas diffusion electrode according to claim (14);

a process of forming a catalyst layer on the fluororesin film to obtain a gas diffusion electrode with catalyst layer; and

a process of joining the gas diffusion electrode with catalyst layer and a polymer electrolyte film.

(16) A method of producing a membrane-electrolyte assembly, comprising:

the process of producing a gas diffusion electrode according to claim (14); and

a process of joining the fluororesin films and a polymer electrolyte film with catalyst layers.

(17) A method of producing a polymer electrolyte fuel cell, comprising:

the process of producing a gas diffusion electrode according to claim (14);

a process of joining the fluororesin films with a catalyst layer, yielding gas diffusion electrodes with catalyst layer;

a process of joining the gas diffusion electrodes with catalyst layer and a polymer electrolyte film, yielding a membrane-electrolyte assembly; and

a process of incorporating the membrane-electrolyte assembly and a separator into a single cell.

(18) A method of producing a polymer electrolyte fuel cell, comprising:

the process of producing a gas diffusion electrode according to claim (14);

a process of joining the fluororesin films and a polymer electrolyte film with catalyst layers, yielding a membrane-electrolyte assembly; and

a process of incorporating the membrane-electrolyte assembly and a separator into a single cell.

(19) The production method according to any one of claims (14) to (18),
wherein the process of providing through-holes in the fluororesin film comprises irradiating a laser on the fluororesin film.

The first gas diffusion electrode of the invention is characterized in that it has a porous fluororesin film that includes fibrous carbon material, and has a smooth surface with the ability to repel and eliminate water due to the fluororesin and conductivity due to the fibrous carbon material. Since the gas diffusion electrode of the invention has the above features, flooding due to humidity water and water generated during operation of the fuel cell is prevented, and has an excellent ability to repel water so as to rapidly supply and remove reaction gas, and excellent conductivity for efficiently transferring the electricity that is generated. The action of the fibrous carbon material prevents flattening of the through-holes in the porous gas diffusion electrode, even under the pressure that is applied to the gas diffusion electrode during fabrication of the fuel cell, and keeps the transmission of water and gas from being hindered. Further, by using a fibrous carbon material, the conductivity also is retained.

On the other hand, fuel cells that employ the gas diffusion electrode of the invention have the ability to eliminate gas and water, and have excellent conductivity, during the power generation cycle. The gas diffusion electrode of the invention has a smooth surface, and thus there also is the effect that compared to a case where a conventional carbon fiber sheet is used, it is more difficult to damage or destroy the catalyst layer and the polymer solid electrolyte film.

According to the second implementation of the invention, it is possible to provide gas diffusion electrodes, membrane-electrolyte assemblies, and polymer electrolyte fuel cells, and methods for producing the same, in which the gas permeability is favorably maintained and the mechanical strength is retained, and as a result can retain favorable cell properties.

In other words, with the gas diffusion electrode of the invention, through-holes are provided and this allows the gas permeability to be favorably maintained, and a columnar structure is kept and as a result the mechanical strength can be retained, and thus the through-holes are less prone to flatten during hot pressing as well, flooding due to humidity water and water generated during operation of the fuel cell is prevented, and there is an excellent ability to repel water so as to rapidly supply and remove reaction gas, and excellent conductivity for efficiently transferring the electricity that is generated.

Since the gas diffusion electrode has a smooth surface that has the ability to repel and eliminate water due to the fluororesin and that is conductive due to the fibrous carbon material, and thus there also is the effect that the catalyst layer or the polymer solid electrolyte film will not be damaged or destroyed.

Moreover, with the invention, it is also possible to provide simple methods for producing gas diffusion electrodes, membrane-electrolyte assemblies, and polymer electrolyte fuel cells. electrolyte fuel cells.

In other words, it is possible to freely form holes later without requiring a solvent component that cannot dissolve the fluororesin in order to form holes in the fluororesin, and by controlling the rate of hole area, it also is easy to adjust the gas permeability and the mechanical strength.

BRIEF DESCRIPTION OF THE DRAWINGS

FIG. 1 is a scanning electron microscope photograph of the cross-sectional structure, before hot pressing, of the gas diffusion electrode of Example 14.

FIG. 2 is a scanning electron microscope photograph of the cross-sectional structure, after hot pressing, of the gas diffusion electrode of Example 14.

FIG. 3 is a scanning electron microscope photograph of the cross-sectional structure, before hot pressing, of the gas diffusion electrode of Comparative Example 4.

FIG. 4 is a scanning electron microscope photograph of the cross-sectional structure, after hot pressing, of the gas diffusion electrode of Comparative Example 4.

FIG. 5 is cross-sectional diagram that schematically shows the layered structure of the polymer electrolyte fuel cell of the Embodiment (First).

FIG. 6 is a schematic perspective diagram of the gas diffusion electrode of the Embodiment (Second).

FIG. 7 is a schematic cross-sectional diagram of the gas diffusion electrode of the Embodiment (Second).

FIG. 8 shows an example of the structure of the membrane-electrolyte assembly of the Embodiment (Second).

DESCRIPTION OF REFERENCE NUMERALS

| 1 | polymer electrolyte film |
| 2a, 2b | catalyst layer |
| 3a, 3b | gas diffusion electrode |
| 4a, 4b | separator |
| 10 | gas diffusion electrode |
| 11 | through-hole |
| 15 | polymer electrolyte film |
| 16 | catalyst layer |
| 50 | membrane-electrolyte assembly |

BEST MODE FOR CARRYING OUT THE INVENTION

The gas diffusion electrode of the invention includes a fluororesin film in which at least carbon material has been dispersed, wherein the fluororesin has a plurality of through-holes. Below, the Embodiment (First) and the Embodiment (Second) are explained separately.

Embodiment (First)

Below, the Embodiment (First) is explained in specific detail. It is preferable that the gas diffusion electrode of the Embodiment (First) has a porous fluororesin film that includes at least a fibrous carbon material, and has a smooth surface that repels and eliminates water due to the fluororesin and that is conductive due to the carbon material.

In the Embodiment (First), examples of the fluororesin include vinylidene fluoride, tetrafluoroethylene, tetrafluoroethylene-fluoroalkylvinylether copolymer, and fluoroethylene-hexafluoropropylene copolymer, and it is possible to select and use a fluororesin made of one or more of these. Of these, olefin fluoride-based resins have high heat resistance and good mechanical strength, and thus are particularly preferable. Olefin fluoride-based resins are advantageous in that they can precisely form a porous film and they can favorably eliminate humidity water in the porous film and the water that is created at the cathode. Olefin fluoride-based resins as discussed in the invention encompass homopolymers of vinylidene fluoride, as well as copolymers and multipolymers such as tripolymers and higher that are made of vinylidene fluoride and one or more monomers selected from the group consisting of tetrafluoroethylene, hexafluoropropylene, and ethylene. The use of these resins individually as well as the use of two or more resins in combination, fall within the scope of the invention.

It is preferable that the above fluororesin has a mean molecular weight (Mw) in the range of 100,000 to 1,200,000.

A mean molecular weight (Mw) less than 100,000 may lower the strength, whereas if it exceeds 1,200,000, then there is decreased ability of the fluororesin to dissolve in solvent, and as a result it may become difficult to produce the paint, or viscosity irregularities in the paint may occur and lower the precision of the thickness of the final gas diffusion electrode, and lead to contact with the catalyst layer that is not uniform.

As the carbon material, it is possible to use fibrous carbon material only, but it is preferable that both fibrous carbon material and particulate carbon material are used. As for the blend ratio of the fluororesin and the carbon material, it is preferable that the carbon material is set to 0.9 to 370 parts by weight to one part by weight fluororesin. The fibrous carbon material possesses electrical conductivity, in addition to functioning as a void flattening prevention member that prevents the through-holes in the porous film made of the fluororesin from being flattened under the pressure that is applied during film made of the fluororesin from being flattened under the pressure that is applied during fabrication of the fuel cell, and therefore prevents the movement of gas and water from being impeded. The fibrous carbon material used in the Embodiment (First) has an aspect ratio (ratio of the diameter of the fiber cross section to the fiber length) in the range of 5 to 10,000. In the Embodiment (First), a preferable aspect ratio is in the range of 10 to 500. When the aspect ratio is too small, it is not possible to prevent the voids from being flattened, whereas when it is too large, the ability of the carbon material to disperse in the fluororesin deteriorates, and thus it is preferable that the aspect ratio is within the above range. Fibrous carbon material whose mean diameter is approximately 150 nm may be used preferably.

Specific examples of the fibrous carbon material include carbon fiber, vapor grown carbon fiber (such as the carbon nanofiber by Showa Denko (product name: VGCF)), and carbon nanotubes.

In the Embodiment (First), the blend ratio of fluororesin and fibrous carbon material is preferably in the range of 0.005 to 370 parts by weight fibrous carbon material to one part by weight fluororesin. When the blend ratio of the fibrous carbon material is less than 0.005 parts by weight, the pressure that is applied to the gas diffusion electrode during production of the fuel cell flattens the voids in the gas diffusion electrode, which is porous, and when it is greater than 370 parts by weight, dispersion into the fluororesin of the porous film drops and this causes irregularities in the surface of the gas diffusion electrode that result in tiny spaces between adjacent layers (such as the catalyst layer) and lower the gas diffusion ability. In either case, a drop in fuel cell performance is the result.

In the Embodiment (First), it is preferable that the carbon material includes particulate carbon material in addition to the fibrous carbon material. Any particulate representative examples of which include furnace black, channel black, and acetylene black. Any grade of carbon black can be used, regardless of the specific surface area or the particle size, and examples include Ketjenblack EC made by Lion Akzo, Vulcan XC72R made by Cabot, and Denka Black made by Denki Kagaku Kogyo. Of these, its high conductivity and ability to disperse in the paint solution make acetylene black particularly favorable. It is preferable that these particulate carbon materials have a mean primary particle diameter in the range of 10 to 100 nm.

The blend ratio of the fluororesin and the particulate carbon material preferably is in the range of up to three parts by weight particulate carbon material to one part by weight fluororesin. More preferably, this is in the range of 1/3 parts by weight to 3/2 parts by weight to one part by weight fluororesin. When the blend ratio of the particulate carbon material is greater than three parts by weight, then the porous film is filled in too much and its gas diffusion ability drops, and this lowers the fuel cell performance. It should be noted that there is a drop in the conductivity when less than 1/3 parts by weight.

It is preferable that the particulate carbon material is used in a range of 0.0025 to 185 parts by weight to one part by weight fibrous carbon material.

In the Embodiment (First), it is also possible for the porous fluororesin film to include a filler other than the above carbon material. Adding such a filler makes it possible to control the elimination of gas and water, the diameter of the holes in the porous film, and the diffusion of the carbon material, and significantly affects fuel cell performance. The filler other than the above carbon material preferably is hydrophilic in nature, and it is possible to use either inorganic microparticles or organic microparticles, but inorganic microparticles are preferable considering the environment within the gas diffusion electrode in the fuel cell. This is because by adding a hydrophilic filler to a fluororesin that has water-repelling properties, the water-repelling portions and the fluororesin that has water-repelling properties, the water-repelling portions and the hydrophilic portions become microscopically intertwined, forming an aggregate with the carbon material that increases the diameter of the holes in the porous film, and thus gas and water are eliminated favorably. As a result, it is possible to prevent a drop in cell performance due to the problem of flooding. Preferable hydrophilic tillers include inorganic oxide microparticles such as titanium dioxide and silicon dioxide. This is because these combine the ability to withstand the environment within the gas diffusion electrode in the fuel cell with sufficient hydrophilicity. The filler particles may be of any particle size, however, there is the problem that an extremely small particle size complicates dispersion within the paint, whereas extremely large particles will block the voids in the porous material. Accordingly, filler particles whose particle size generally is in the same range as the particle size of the particulate carbon material, that is, 10 to 100 nm, are used.

The weight ratio of the filler to the fluororesin preferably is not more than three parts by weight filler to one part by weight fluororesin. More preferably, it is not more than 3/2 parts by weight filler. When the filler is blended at more than three parts by weight, too much fills in the porous film and results in a drop in the gas diffusion ability and the conductivity. Ultimately this leads to a drop in fuel cell performance.

In the gas diffusion electrode of the Embodiment (First), it is also possible to layer a sheet-shaped conductive porous body on the porous film. Examples of the conductive porous body include carbon paper and carbon cloth made from carbon fiber, foamed nickel, and a titanium fiber sintered body. A gas diffusion electrode laminated with a conductive porous body has a layered structure made of the porous film and the conductive porous body, and thus is different from the gas diffusion electrode set forth in Patent Document 1 in that the voids in the conductive porous body are not blocked by the resin and the carbon material, for example, making up the porous film. Consequently, the gas permeability into the voids is good, and the problem of lowering the cell performance is eliminated.

In the Embodiment (First), the thickness of the porous film of the gas diffusion electrode for the polymer electrolyte fuel cell preferably is from 5 $\mu$m to 150 $\mu$m, more preferably from 10 $\mu$m to 100 $\mu$m, and most preferably from 15 $\mu$m to 50 $\mu$m. When the thickness is less than 5 $\mu$m, the water retention effect is not sufficient, whereas a thickness greater than 150 $\mu$m is too thick and causes a drop in the gas diffusion ability and the ability to eliminate water, lowering cell performance.

The porous film of the gas diffusion electrode of the Embodiment (First) is constituted by a porous fluororesin film made of fluororesin, and the criteria for assessing the structure of the porous film include density, void content, and void size. The void content of the porous fluororesin film is ideally in the range of 60% to 95%, more preferably at least 70%, and particularly preferably at least 80%. There is insufficient gas diffusion ability and water elimination when the void content is less than 60%, whereas a void content that is greater than 95% results in a noticeable drop in the mechanical strength, and this increases the likelihood that breakage will occur during processing to build the fuel cell.

It should be noted that the void content can be found by substituting a = (specific gravity of the fluororesin in the porous fluororesin film) $\times$ (percent weight of the fluororesin in the porous fluororesin film), b = (specific gravity of the particulate carbon material) $\times$ (percent weight of the particulate carbon material in the porous fluororesin film), c = (specific gravity of the filler) $\times$ (percent weight of the filler in the porous fluororesin film), d = (specific gravity of the fibrous carbon material) $\times$ (percent weight of the fibrous carbon material in the porous fluororesin film), and the density of the porous fluororesin film, into the following expression.

$$\text{void content } (\%) = [\{(a+b+c+d) - \text{density of the porous fluororesin}\} / (a+b+c+d)] \times 100$$

As illustrated below, the density can be determined from the thickness and the mass to unit area of the porous fluororesin film of the gas diffusion electrode, and a density in the range of 0.10 to 0.75 g/cm$^3$ is favorable for the reasons discussed above.

$$\text{density } (g/cm^3) = \text{mass to unit area} / (\text{film thickness} \times \text{unit area})$$

The void size preferably ideally is in the range of 1 $\mu$m to 10 $\mu$m, more preferably at least 3 $\mu$m, and even more preferably at least 5 $\mu$m. A void size less than 1 $\mu$m results in an insufficient ability to diffuse gas and eliminate water.

The gas diffusion electrode of the Embodiment (First) can be produced as follows. First, the fluororesin is dissolved in a solvent, and then the fibrous and particulate carbon material, and, in some instances, a filler other than the carbon material, are dispersed to create a solvent mixture. Next, a solvent whose boiling point is higher than the solvent in which the fluororesin is dissolved, and that does not dissolve the fluororesin, is mixed, producing a paint. An example of the solvent for dissolving the fluororesin is 1-methyl-2-pyrolidone.

An example of the solvent that does not dissolve the fluororesin is diethylene glycol. Commercially available agitators and dispersers can be used to dissolve, disperse, and mix the paint. The paint that is obtained is applied to a suitable substrate and dried to form a conductive porous fluororesin film, yielding the gas diffusion electrode of the Embodiment (First). It should be noted that the substrate is removed when this is incorporated into the fuel cell, and favorable substrates that may be used in polyimide film and polyethylenenapthalate (PEN) film.

In a case where the gas diffusion electrode of the Embodiment (First) has a structure in which a sheet-shaped conductive porous body is layered on the above porous fluororesin film, then this structure can be produced by placing a sheet-shaped conductive porous body on a porous fluororesin film that has been formed as above and applying pressure by hot pressing, for example, to join the two.

The membrane-electrolyte assembly for a polymer electrolyte fuel cell of the Embodiment (First) has a structure in which the gas diffusion electrode that has been produced as above is layered on both sides of a polymer electrolyte film, with a catalyst layer interposed between them. This membrane-electrolyte assembly for a polymer electrolyte fuel cell can be produced as follows. In one method, first, in the same manner as above, a porous fluororesin film that is made of a fluororesin film that includes fibrous carbon material or a mixture of fibrous carbon material and particulate carbon material is formed on a substrate to produce a gas diffusion electrode, then a paint for forming a catalyst layer is applied thereto to form a gas diffusion electrode with catalyst layer, and then two gas diffusion electrodes with catalyst layer that have been obtained are arranged so that their catalyst layer is in contact with a surface of the polymer electrolyte film and hot pressed to join the polymer electrolyte film and the gas diffusion electrodes with catalyst layer. The substrate is then stripped away, and by doing this it is possible to produce the membrane-electrolyte assembly for a polymer electrolyte fuel cell.

Another method is to form catalyst layers by applying a paint for catalyst layer formation to both surfaces of a polymer electrolyte film, producing a polymer electrolyte film with catalyst layers. Next, gas diffusion electrodes, both of which have been fabricated as discussed above, are disposed on the catalyst layer surfaces of the polymer electrolyte film with catalyst layers and then hot pressed to join the polymer electrolyte film with catalyst layers and the gas diffusion electrodes. The substrate is then stripped away, and so doing it is possible to produce a membrane-electrolyte assembly for a polymer electrolyte fuel cell.

Since the method of producing the membrane-electrolyte assembly of the Embodiment (First) involves only the fabrication of a gas diffusion electrode with a catalyst layer or a polymer electrolyte film with catalyst layers, hot pressing to join these to a polymer electrolyte film or gas diffusion electrodes, and then stripping away the substrates on the surface opposite the catalyst layer surface of the gas diffusion electrode with catalyst layer, it is possible to very easily manufacture the membrane-electrolyte assembly. Additionally, since the membrane-electrolyte assembly that is formed is provided with the above gas diffusion electrode, it can readily eliminate gas and water and has excellent conductivity.

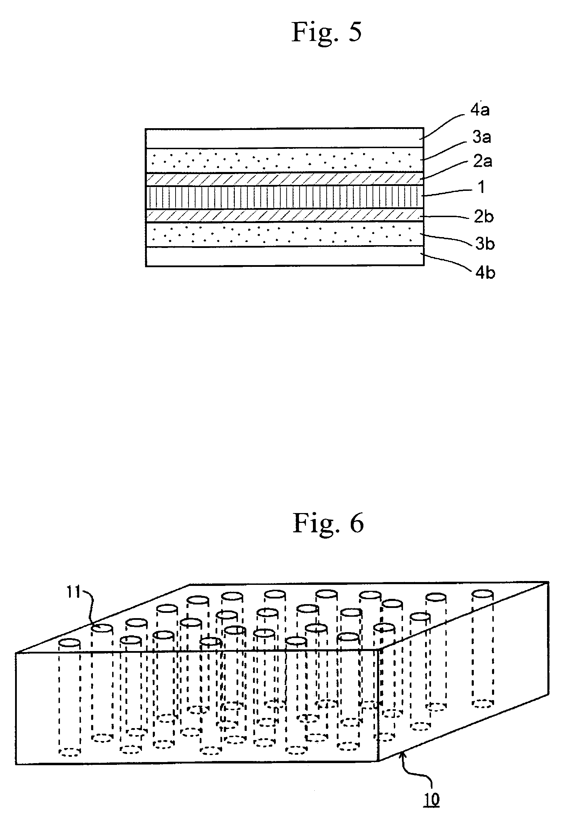

Consequently, the polymer electrolyte fuel cell of the Embodiment (First), which is constituted by a cell in which carbon paper is disposed on both surfaces of this membrane-electrolyte assembly and then a separator is disposed outside the carbon paper, has excellent power generation properties. It should be noted that any separator known to the public that is used in polymer electrolyte fuel cells can be used as the separator. FIG 5 is a cross-sectional view that schematically shows the layered structure of the polymer electrolyte fuel cell of the Embodiment (First), and illustrates how gas diffusion electrodes 3a and 3b are disposed on both faces of a polymer electrolyte film 1, with catalyst layers 2a and 2b therebetween, and then separators 4a and 4b are disposed outside the gas diffusion electrodes 3a and 3b.

Embodiment (Second)

The present Embodiment (Second) is described in specific detail below.

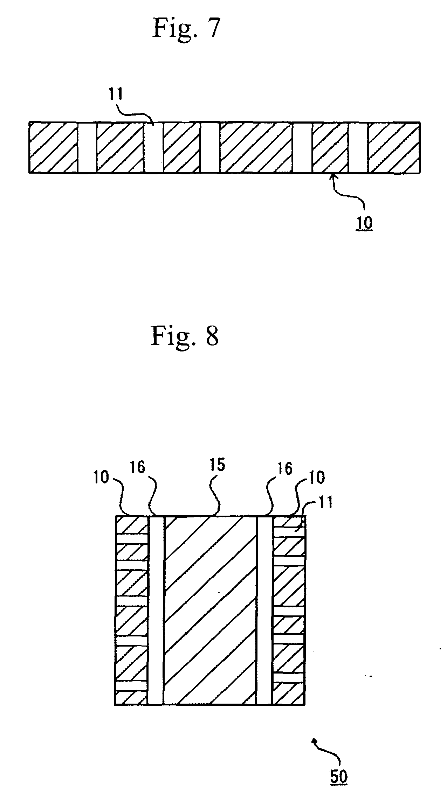

First, the structure of the gas diffusion electrode of the Embodiment (Second) will be explained using FIG 6 and FIG 7.

FIG. 6 is a schematic perspective view of the gas diffusion electrode of the Embodiment (Second), and FIG. 7 is a schematic cross-sectional view of the gas diffusion electrode of the Embodiment (Second).

Reference numeral 10 denotes the gas diffusion electrode, and 11 denotes through-holes.

As illustrated in these diagrams, providing the gas diffusion electrode 10 with through-holes 11 leads to excellent gas permeability, and by keeping a columnar structure, the gas diffusion electrode 11 possesses mechanical strength.

Examples of the fluororesin that is used as the raw material for the gas diffusion electrode of the Embodiment (Second) include vinylidene fluoride, tetrafluoroethylene, tetrafluoroethylene-fluoroalkylvinylether copolymer, and fluoroethylene-hexafluoropropylene copolymer, and it is possible to select and use a fluororesin made of one or more of these. Of these, olefin fluoride-based resins have high heat resistance and good mechanical strength and thus are particularly preferable. Olefin fluoride-based resins are advantageous in that they can precisely form a porous film and can favorably eliminate humidity water in the fluororesin film and the water that is created at the cathode. Olefin fluoride-based resins as discussed in the Embodiment (Second) encompass homopolymers of vinylidene fluoride, as well as copolymers and multipolymers such as tripolymers and higher that are made of vinylidene fluoride and one or more monomers selected from the group consisting of tetrafluoroethylene, hexafluoropropylene, and ethylene. The use of these resins individually as well as the use of two or more resins in combination fall within the scope of the Embodiment (Second).

It is preferable that the above fluororesin has a mean molecular weight (Mw) in the range of 100,000 to 1,200,000.

A mean molecular weight (Mw) less than 100,000 may lower the strength, whereas if it exceeds 1,200,000, then the ability of the fluororesin to dissolve in solvent worsens, and as a result it may become difficult to produce the paint, or viscosity irregularities may occur in the paint and lower the precision of the thickness of the final gas diffusion electrode, leading to contact with the catalyst layer that is not uniform.

Any carbon material that is particulate can be used as the carbon material that is dispersed in the fluororesin, and it is possible to use so-called carbon black, representative examples of which include furnace black, channel black, and acetylene black. Carbon black, and particularly acetylene black, is particularly favorable due to its high conductivity and ability to disperse within a paint solution. Any grade of carbon black can be used, regardless of the specific surface area or the particle size, and examples include Ketjenblack EC made by Lion Akzo, Vulvan XC72R made by Cabot, and Denka Black made by Denki Kagaku Kogyo. In this Embodiment (Second), it is preferable that these carbon materials have a mean primary particle diameter in the range of 10 to 100 nm. Another particulate carbon material is graphite, which also may be included in the particulate carbon material.

It is also possible to use fibrous carbon material. In addition, it is also possible to mix the particulate carbon material and the fibrous carbon material.

Examples of the fibrous carbon material include carbon fiber and carbon nanofiber by Showa Denko (product name: VGCF), and carbon nanotubes.

The weight ratio of the fluororesin and the carbon material (particulate and/or fibrous) preferably is in the range of 1/3 to 10 parts by weight carbon material to one part by weight fluororesin. Preferably, this is in the range of 2/3 to 6 parts by weight. When the carbon material is a particulate carbon material, then preferably its weight ratio is 2/3 to 3/2 parts by weight, and when the carbon material is a fibrous carbon material, then preferably its weight ratio is 1 to 6 parts by weight. When the carbon material is less than 1/3 parts by weight, then a drop in the conductivity of the gas exchange layer is observed, and when it is greater than 10 parts by weight, the mechanical strength of the fluororesin film becomes too weak and it cannot withstand the pressure of the gas diffusion.

In either case, the end result is a drop in the fuel cell performance.

The thickness of the fluororesin preferably is from 5 $\mu$m to 150 $\mu$m, more preferably from 10 $\mu$m to 100 $\mu$m, and most preferably from 15 $\mu$m to 50 $\mu$m. When the thickness is less than 5 $\mu$m, the water retention effect is not sufficient, whereas a thickness greater than 150 $\mu$m is too thick and causes a drop in the gas diffusion ability and the ability to eliminate water, lowering cell performance.

In this Embodiment (Second), it is possible for the through-holes provided in the fluororesin film to have a simple cylindrical shape, and it is also possible for the through-holes to have a structure that widens near the surface of the fluororesin film and narrows at the interior. The through-holes also may have a bowl-shape in which its diameter at one surface is wide and its diameter narrows at the opposite surface. The through-holes may be perpendicular to the fluororesin film, and depending on the path of gas flow, it is also possible for the through-holes to be disposed obliquely to the fluororesin film surface. It is good for the diameter of the through-holes to be 50 $\mu$m or less so that the gas disperses uniformly.

The fluororesin film can be evaluated based on the rate of hole area, density, and void content, which are criteria for assessing the structure of the film that has the through-holes.

The rate of hole area can be found through the following expression.

$$\text{rate of hole area (\%)} = (\text{hole area to unit area / unit area}) \times 100$$

The rate of hole area of the fluororesin film of ideally is in the range of 20% to 95%, more preferably is at least 50%, and particularly preferably is at least 70%. An rate of hole area that is less than 20% causes the gas diffusion ability and water elimination to be insufficient, whereas there is a noticeable drop in the mechanical strength when the rate of hole area is greater than 95%, and this increases the likelihood that breakage will occur during processing to build the fuel cell.

As illustrated below, the density can be determined from the thickness and the mass to unit area of the fluororesin film.

$$\text{density (g/cm}^3\text{)} = \text{mass to unit area / (film thickness} \times \text{unit area)}$$

It is favorable for the density of the fluororesin film of to be in the range of 0.10 to 1.55 g/cm$^3$.

The void content can be found through the following expression.

$$\text{void content (\%)} = [\{(a+b+c+d) - \text{density of the porous fluororesin}\} / (a+b+c+d)]$$

$$\times 100$$

(where a = (specific gravity of the fluororesin in the fluororesin film) × (percent weight of the fluororesin in the fluororesin film), b = (specific gravity of the particulate carbon material) × (percent weight of the particulate carbon material in the fluororesin film), c = (specific gravity of the filler) × (percent weight of the filler in the fluororesin film), and d = (specific gravity of the fibrous carbon material) × (percent weight of the fibrous carbon material in the fluororesin film).

The void content of the fluororesin film of is ideally in the range of 20% to 95%, more preferably at least 50%, and particularly preferably at least 70%. There is insufficient gas diffusion ability and water elimination when the void content is less than 20%, whereas a void content that is greater than 95% results in a noticeable drop in the mechanical strength, and this increases the likelihood that breakage will occur during processing to build the fuel cell.

It should be noted that since through-holes are provided in this aspect of the Embodiment (Second), there is a close relationship between the rate of hole area and the void content. Accordingly, the void content can be controlled by taking the rate of hole area as the target value during processing.

It is also possible for the fluororesin film of to include a filler other than the above carbon material. By adding such a filler it is possible to control the elimination of gas and water, and the diffusion of the carbon material, and significantly affects fuel cell performance. The filler that is used in the Embodiment (Second) preferably is hydrophilic is nature. This is because adding a hydrophilic filler to a fluororesin that has water-repelling properties, the water-repelling portions and the hydrophilic portions become microscopically intertwined and form an aggregate with the carbon material that is exposed to the interior of the through-holes, and as a result, the elimination of gas and water is carried out favorably. Accordingly, it is possible to prevent a drop in cell performance due to the problem of flooding. It is possible to use either inorganic microparticles or organic microparticles as the filler, but inorganic microparticles are preferable considering the environment within the gas diffusion electrode in the fuel cell.

Preferable examples of such a filler include inorganic oxide microparticles such as titanium dioxide and silicon dioxide. This is because these combine the ability to withstand the environment within the gas diffusion electrode in the fuel cell with sufficient hydrophilicity. Filler particles of any particle size may be used, however, there is the problem that an extremely small particle size complicates dispersion within the paint, whereas an extremely large particle size lowers the conductivity of the fluororesin film range as the particle size of the particulate carbon material, that is, 10 to 100 nm, are used.

The weight ratio of the filler to the fluororesin preferably is not more than three parts by weight filler to one part fluororesin. More preferably, it is not more than 3/2 parts by weight. When the filler is blended at more than three parts by weight, too much fills into the porous film and lowers the gas diffusion ability and the conductivity and ultimately this leads to a drop in fuel cell performance.

As regards the gas diffusion electrode of the Embodiment (Second), it is possible to use the fluororesin film with through-holes as the gas diffusion electrode as it is, and it is also possible to further laminate a sheet-shaped conductive porous body on the fluororesin film and use this as the gas diffusion electrode. Examples of the sheet-shaped conductive porous body include carbon paper and carbon cloth made from carbon fiber, foamed nickel, and a titanium fiber sintered body. By giving the gas diffusion electrode a layered structure made of the fluororesin film and the sheet-shaped conductive porous body, the through-holes in the sheet-shaped conductive porous body will not be blocked by the resin and the carbon material, for example, making up the fluororesin film. Consequently, the gas permeability in the through-holes is good, and the problem of lowering the cell performance is eliminated.

Next, the membrane-electrolyte assembly of the Embodiment (Second) is achieved by providing the above gas diffusion electrode with a polymer electrolyte film, with a catalyst layer interposed between them.

The catalyst layer and the gas diffusion electrode are laminated to at least one face of the polymer electrolyte film. That is, it is possible to dispose the gas diffusion electrode of the Embodiment (Second) on both faces of the polymer electrolyte film, with a catalyst layer interposed between them, and it is also possible for a catalyst layer and the gas diffusion electrode of the Embodiment (Second) to be disposed on one face and, on gas diffusion electrode of the Embodiment (Second) to be disposed on one face and, on the other face, to dispose a catalyst layer and a gas diffusion electrode that is known to be public.

FIG. 8 shows an example of the structure of the membrane-electrolyte assembly of the Embodiment (Second).

Reference numeral 15 denotes a polymer electrolyte film, 16 denotes a catalyst layer, and 50 denotes the membrane-electrolyte assembly.

The polymer electrolyte fuel cell of the Embodiment (Second) has a structure in which, where necessary, carbon paper or carbon cloth is disposed outside the membrane-electrolyte assembly, and a separator is disposed outside the carbon paper or carbon cloth.

The polymer electrolyte fuel cell of the Embodiment (Second) is furnished with the foregoing gas diffusion electrode, and thus has excellent power generation properties. It should be noted that any separator that is used in polymer electrolyte fuel cells can be used as the separator.

The method of producing the gas diffusion electrode of the Embodiment (Second) is described next.

The gas diffusion electrode of the Embodiment (Second) can be produced through a process of forming a fluororesin film by drying a solution obtained by dispersing carbon material in a fluororesin solution, and a process of providing through-holes in the fluororesin film.

Specifically first the fluororesin is dissolved in a solvent, and then particulate and/or fibrous carbon material, and, in some instances, a filler other than carbon material, are dispersed in this and mixed to produce a solvent mixture that serves as a paint. An example of the solvent for dissolving the fluororesin is 1-methyl-2-pyrolidone. Dissolving, dispersing, and mixing can be achieved using commercially available agitators and dispersers.

The paint that is obtained is applied to a suitable substrate and dried to form a conductive porous fluororesin film. The substrate is removed at the time of incorporation into the fuel cell, and as the substrate it is favorable to use polyimide film or polyethylenenapthalate (PEN) film, for example.

Then, the fluororesin film that is obtained is later provided with through-holes by executing a hole providing process, and by doing this it is possible to obtain a gas diffusion electrode in the form of a fluororesin film having through-holes.

One method for producing the gas diffusion electrode of by providing through-holes in the fluororesin film involves irradiating a laser on the surface of the fluororesin film. Examples of the laser include ultraviolet (UV) lasers, $CO_2$ lasers, and excimer lasers, and the laser is employed in a hole providing process for semiconductor circuit boards or flexible substrates, for examples.

A separate method is to create through-holes by puncturing the fluororesin film with mechanical means such as a fine needle or drill.

It should be noted that it is only necessary for desired through-holes to be provided, and thus there is no limitation to these.

If a gas diffusion electrode in which a sheet-shaped conductive porous body has been laminated is to be fabricated, then this can be obtained by stacking a sheet-shaped conductive porous body on the fluororesin film formed as above and applying pressure by hot pressing or the like to join the two.

Next, the membrane-electrolyte assembly of the Embodiment (Second) can be manufactured through a process of forming a fluororesin film by drying a solution that is obtained by dispersing carbon material in a fluororesin solution, a process of providing through-holes in the fluororesin, a process of forming a catalyst layer on the tluororesin film to yield a gas diffusion electrode with catalyst layer, and a process of joining the gas diffusion electrode with catalyst layer and a polymer electrolyte film.

It is also possible to produce the membrane-electrolyte assembly of the Embodiment (Second) through a process of forming a fluororesin film by drying a solution that is obtained by dispersing carbon material in a fluororesin solution, a process of providing through-holes in the fluororesin, and a process of joining the fluororesin film and a polymer electrolyte film with catalyst layer.

In other words, first, gas diffusion electrodes are produced on substrates as discussed above and then a paint for forming a catalyst layer is applied thereto to produce gas diffusion electrodes with a catalyst layer. Next, the gas diffusion electrodes with a catalyst layer that have been obtained are arranged so that their catalyst layer is in contact with a polymer electrolyte film, and these are hot pressed to joint the polymer electrolyte film and the gas diffusion electrodes with a catalyst layer. Next, by stripping away the substrate, it is possible to produce the membrane-electrolyte assembly of the Embodiment (Second).

It is also possible to apply a paint for catalyst layer formation onto a polymer electrolyte film to form catalyst layers and thereby produce a polymer electrolyte film with catalyst layers. Gas diffusion electrodes that have been produced as above are disposed on the surface of the catalyst layers of the polymer electrolyte film with catalyst layers, and these are hot pressed to join the polymer electrolyte film with catalyst layers and the gas diffusion electrodes. Next, by stripping away the substrate, it is possible to produce a membrane-electrolyte assembly.

Since the method of producing the membrane-electrolyte assembly involves only the joining of a polymer electrolyte film to a gas diffusion electrode with a catalyst layer between them, and then stripping away the substrate, it is possible to very easily manufacture the membrane-electrolyte assembly. Additionally, since the membrane-electrolyte assembly that is formed is furnished with the above gas diffusion electrode, it can readily eliminate gas and water and has excellent conductivity.

The polymer electrolyte fuel cell of the Embodiment (Second) can be manufactured by disposing, if necessary, carbon paper or carbon cloth on both faces of the above membrane-electrolyte assembly, disposing a separator outside the carbon paper or carbon cloth, and incorporating this into a single cell. The method for producing the membrane-electrolyte assembly can be any of the methods discussed earlier.

[Examples]

The first embodiment of the invention is described in more specific detail through examples. A gas diffusion electrode is fabricated as below, then the gas diffusion electrode is disposed on both the fuel electrode side and the oxygen electrode side to fabricate a polymer electrolyte fuel cell, and this was then evaluated.

[Examples 1 to 10, Comparative Examples 1 and 2]

(Fabrication of the Gas Diffusion Electrode)

30 parts by weight vinylidene fluoride resin were dissolved in 600 parts by weight 1-methyl-2-pyrolidone, and acetylene black with a mean primary particle size of 40 nm and carbon fiber (product name: VGCF (aspect ratio 10 to 500), made by Showa Denko) were added at the blend amounts listed in Table 1 and dispersed, yielding a dispersion solution. Next, 45 parts by weight diethylene glycol were mixed with this and agitated, yielding a paint. The paint that was obtained was coated on a polyethylenenapthalate (PEN) film using an applicator to produce a coated film that was then dried, yielding a gas diffusion electrode made from a porous fluororesin film.

(Measuring Physical Properties and Testing to Confirm Void Flattening)

The weight to unit area and the film thickness of the gas diffusion electrode that was obtained were measured. The density was calculated from the measured weight, and the void content was calculated. Next, to confirm the extent of void flattening due to the hot pressing, hot pressing (120°C, 10 MPa, 10 minutes) was performed on a polyethylenenapthalate film and then the film thickness after hot pressing was measured. The percent change in film thickness (%) was then found through the following equation. percent change in film thickness (%) = (film thickness before hot pressing - film thickness after hot pressing) / film thickness before hot pressing $\times$ 100.

Table 1 shows the blend amount of acetylene black and the carbon fiber, the film thickness before and after hot pressing, the percent change in film thickness, and the void content before hot pressing.

[Table 1]

|  | Parts by weight Acetylene Black to one part by weight fluororesin | Parts by weight carbon fiber to one part by weight fluororesin | Film thickness before hot pressing ($\mu$m) | Film thickness after hot pressing ($\mu$m) | Percent change in film thickness (%) | Void content (%) |
|---|---|---|---|---|---|---|
| Comparative Example 1 | 1.23 | 0 | 26.0 | 12.7 | 51.2 | 84.5 |
| Comparative Example 2 | 0.92 | 0 | 27.5 | 12.7 | 53.8 | 83.5 |
| Example 1 | 0.92 | 0.005 | 25.0 | 14.5 | 42.0 | 83.5 |
| Example 2 | 0.92 | 0.01 | 26.0 | 18.5 | 28.8 | 83.8 |
| Example 3 | 0.92 | 031 | 25.0 | 18.5 | 26.0 | 84.1 |
| Example 4 | 0.92 | 0.92 | 24.0 | 18.2 | 24.2 | 85.4 |
| Example 5 | 0.92 | 2.76 | 26.0 | 20.0 | 23.1 | 88.3 |
| Example 6 | 0.92 | 4.14 | 27.0 | 21.0 | 22.2 | 89.2 |
| Example 7 | 0.92 | 11.04 | 25.0 | 20.5 | 18.0 | 90.1 |
| Example 8 | 0.92 | 36.8 | 24.0 | 20.3 | 15.4 | 91.5 |
| Example 9 | 0.92 | 368 | 24.5 | 21.2 | 13.5 | 92.0 |
| Example 10 | 0 | 368 | 25.5 | 22.5 | 11.8 | 92.5 |

(Observation of the Gas Diffusion Electrode)

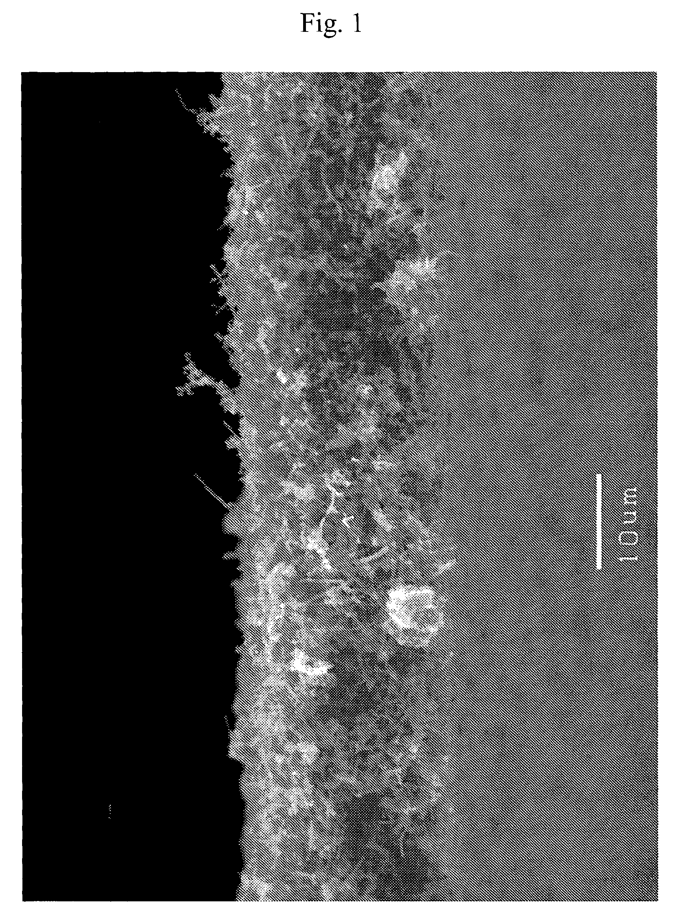

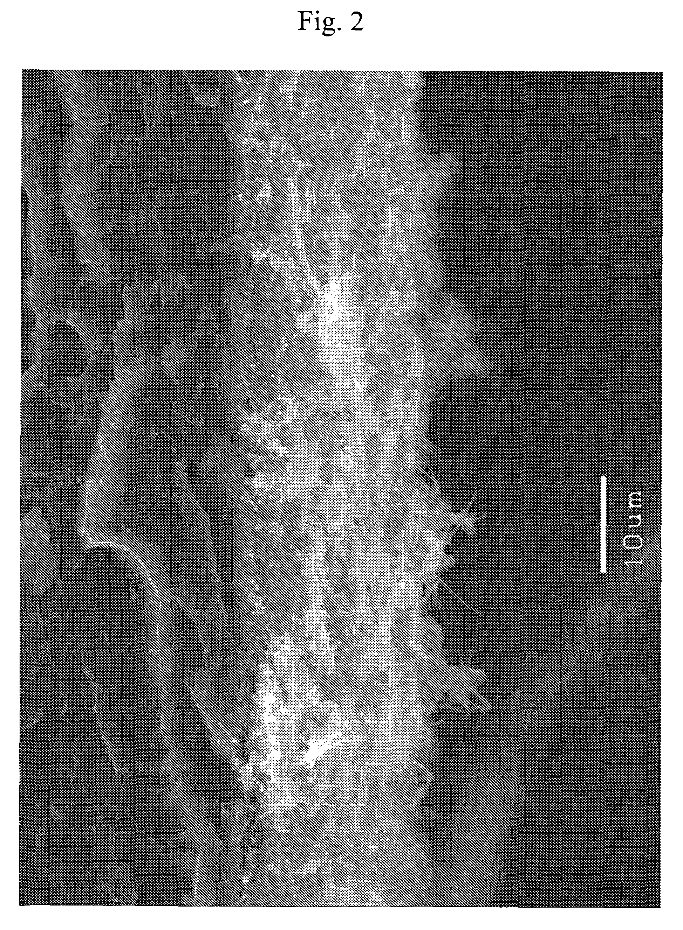

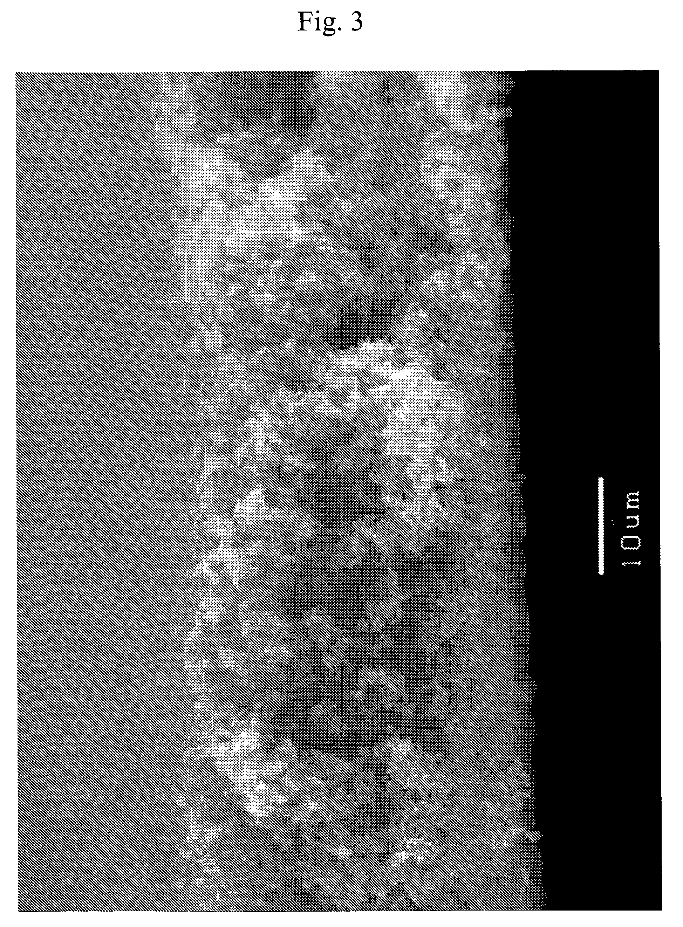

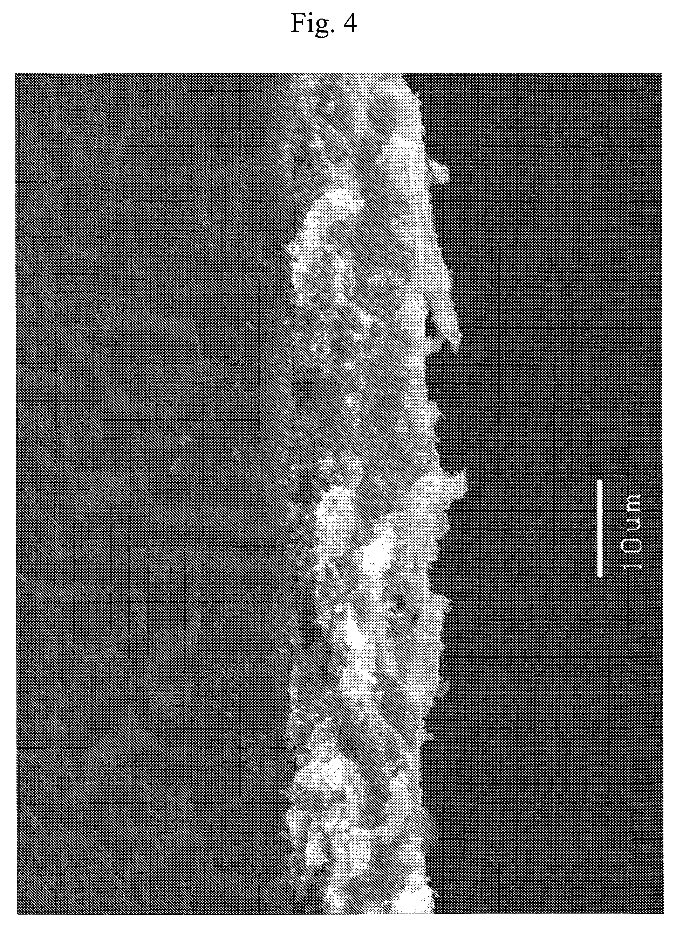

The cross-sectional fine structure of the gas diffusion electrodes of Example 4 and Comparative Example 2 before and after hot pressing was observed using a scanning electron microscope (SEM) (Figs. 1 through 4). In the image before hot pressing, it can be confirmed that in both Example 4 and Comparative Example 2, the fluororesin forms a porous film, and the acetylene black is present on the surface and in the interior of the carbon fiber and the fluororesin. From the images after hot pressing, it was clear that in Example 4 the void flattening was small (see FIG. 2), but in Comparative Example 2 the void structure had been flattened and thereby flattened toward the fluororesin at the top and bottom surface layers (see FIG 4).

The percent change in film thickness was compared for the gas diffusion electrodes of Comparative Example 2 and Working Example 4, and it was found that while in Comparative Example 2 the film had been flattened by 53.8%, in Example 4 it was flattened by only 24.2%, or less than half of that in Comparative Example 2, demonstrating a noticeable effect in inhibiting void flattening.

Although Comparative Example 1 corresponds to Example 3 in which carbon fiber has been substituted by acetylene black, that is, the parts by weight acetylene black is equivalent to the parts by weight carbon material in Example 3 (total acetylene black and carbon fiber), the percent change in film thickness in Comparative Example 1 was 51.2%, which is larger than the 26.0% seen in Example 3. From these results, it can be confirmed that acetylene black cannot be expected to inhibit void flattening as well as carbon fiber.

[Examples 1-A to 10-A, Comparative Examples 1-A and 2-A]

(Example A of Fabrication of the Polymer electrolyte fuel cell)

Two gas diffusion electrodes (with substrate) with 50 mm edges obtained in Examples 1 to 10 and Comparative Examples 1 and 2 were prepared. A catalyst paint made of carbon that supports a platinum catalyst, an ion conducting resin, and a mixed solvent of water and ethanol was applied to the surface of the porous film of the two gas diffusion electrodes and dried to form catalyst layers, thereby yielding gas diffusion electrodes with a catalyst layer. The amount of platinum catalyst in each of these was 0.3 mg/cm$^2$. Next, the gas diffusion electrodes with a catalyst layer were disposed so that their catalyst layer surface is in contact with a polymer electrolyte film (product name: Nafion 117, made by DuPont) and hot pressed (120°C, 10 MPa, 10 minutes) to join the gas diffusion electrodes with catalyst layer and the polymer electrolyte film, and then the PEN film substrate used when manufacturing the gas diffusion electrode was stripped away, yielding a membrane-electrolyte assembly. Carbon paper was disposed on both surfaces of the membrane-electrolyte assembly that was obtained, then graphite separators were disposed outside the carbon paper and this was incorporated into a single cell, yielding a polymer electrolyte fuel cell for evaluation (Examples 1-A to 10-A, Comparative Examples 1-A and 2-A).

[Examples 1-B to 10-B, Comparative Examples 1-B and 2-B]

(Example B of Fabrication of the Polymer electrolyte fuel cell)

A catalyst paint made of carbon that supports a platinum catalyst, an ion conducting resin, and a solvent was applied to both surfaces of a polymer electrolyte film (product name: Nafion 117, made by DuPont) and dried to form catalyst layers, yielding a polymer electrolyte film with catalyst layers. The amount of platinum catalyst in each of these was 0.3 mg/cm$^2$. Next, the gas diffusion electrodes (with substrate) obtained in Examples 1 to 10 and Comparative Examples 1 to 2 were disposed so that their gas diffusion electrode surface is in contact with the polymer electrolyte film with catalyst layers and hot pressed (120°C, 10 MPa, 10 minutes) to join the polymer electrolyte film with catalyst layers and the gas diffusion electrodes, and then the PEN film substrate used when manufacturing the gas diffusion electrode was stripped away, yielding a membrane-electrolyte assembly. Carbon paper was disposed on both surfaces of the membrane-electrolyte assembly that was obtained, then a graphite a separator was disposed outside the carbon paper and this was incorporated into a single cell, yielding a polymer electrolyte fuel cell for evaluation (Examples 1-B to 10-B, Comparative Examples 1-B and 2-B).

(Evaluating the Polymer electrolyte fuel cells)

The power generation properties of the 24 polymer electrolyte fuel cells (Examples 1-A to 10-A and Comparative Examples 1-A and 2-A, and Examples 1-B to 10-B and Comparative Examples 1-B and 2-B) were evaluated with the following procedure. As the gasses supplied to the polymer electrolyte fuel cell, hydrogen gas was used on the fuel electrode side and oxygen gas was used on the oxygen electrode side. Hydrogen gas was supplied at a humidity temperature of 85°C, 500 mL/min, and 0.1 MPa, and the oxygen gas was supplied at a humidity temperature of 70°C, 1000 mL/min. and 0.1 MPa. Under these conditions, the voltage was measured at a current density of 1A/cm$^2$. The results are shown in Table 2.

[Table 2]

|  | Voltage (V) |
|---|---|
| Example 1-A | 0.64 |
| Example 1-B | 0.65 |
| Example 2-A | 0.65 |
| Example 2-B | 0.66 |
| Example 3-A | 0.66 |
| Example 3-B | 0.67 |
| Example 4-A | 0.68 |
| Example 4-B | 0.69 |
| Example 5-A | 0.70 |
| Example 5-B | 0.71 |
| Example 6-A | 0.72 |
| Example 6-B | 0.72 |
| Example 7-A | 0.71 |
| Example 7-B | 0.72 |
| Example 8-A | 0.68 |
| Example 8-B | 0.69 |
| Example 9-A | 0.67 |
| Example 9-B | 0.68 |
| Example 10-A | 0.66 |
| Example 10-B | 0.65 |
| Comparative Example 1-A | 0.62 |
| Comparative Example 1-B | 0.63 |
| Comparative Example 2-A | 0.61 |
| Comparative Example 2-B | 0.62 |

As shown in Table 2, the polymer electrolyte fuel cells furnished with the gas diffusion electrodes of Examples 1 to 10 (Examples 1-A to 10-A and Examples 1-B to 10-B) have excellent power generation properties, with a higher voltage at a current density of 1A/cm$^2$ than the polymer electrolyte fuel cells furnished with the gas diffusion electrodes of Comparative Examples 1 and 2 (Comparative Example 1-A, Comparative Example 2-A, Comparative Example 1-B, and Comparative Example 2-B). This is because the gas diffusion electrode of the Embodiment (First) has a porous film that is made from a fluororesin that includes only fibrous carbon material or a combination of fibrous carbon material and micro-particulate carbon material, and thus flooding by humidity water and water generated during operation of the fuel cell can be prevented and the gas permeability becomes higher, and as a result, the polymer electrolyte fuel cell of the Embodiment (First) has good cell performance as seen in its power generation properties.

The second embodiment of the invention is described through examples and comparative examples.

A gas diffusion electrode is created as below and then the gas diffusion electrode is disposed on both the fuel electrode side and the oxygen electrode side, producing a polymer electrolyte fuel cell, and this was then evaluated.

14

(Production of the Gas Diffusion Electrode)

First, the gas diffusion electrodes of Examples 11 to 21 were produced.

30 parts by weight vinylidene fluoride resin were dissolved in 600 parts by weight 1-methyl-2-pyrolidone, and acetylene black with a mean primary particle size of 40 nm and/or carbon nanofiber (product name: VGCF (aspect ratio 10 to 500), made by Showa Denko) were dispersed at the parts by weight listed in Table 3, and then, in Example 20 silicon dioxide, and in Example 21 titanium oxide, were added as filler, yielding a paint in the form of a dispersion solution. The paint that was obtained was coated on a PEN substrate using an applicator to produce a coated film that was then dried, yielding a fluororesin film.

[Table 3]

| | Parts by weight Acetylene Black to one part by weight fluororesin | Parts by weight carbon nanofiber to one part by weight fluororesin | Parts by weight filler to one part by weight fluororesin |
|---|---|---|---|
| Example 11<br>Example 12<br>Example 13 | 0.90 | 0 | 0 |
| Example 14<br>Example 15<br>Example 16 | 0 | 3.6 | 0 |
| Example 17<br>Example 18<br>Example 19 | 0.33 | 1.32 | 0 |
| Example 20 | 0.92 | 0 | 0.23 silicon dioxide |
| Example 21 | 0.92 | 0 | 0.23 titanium dioxide |
| Comparative Example 3 | 1.23 | 0 | 0 |
| Comparative Example 4 | 0.92 | 0 | 0 |

Subsequently, an ultraviolet (UV) laser is irradiated on the fluororesin film to produce fine through-holes at the porosities listed in Table 4 (target value when processing). The hole diameters were approximately 25 μm. Thus, the gas diffusion electrodes of Examples 11 to 21, which are fluororesin films having through-holes, were obtained.

Next, the gas diffusion electrodes of Comparative Examples 3 and 4 were produced.

30 parts by weight vinylidene fluoride resin were dissolved in 600 parts by weight 1-methyl-2-pyrolidone, and acetylene black with a mean primary particle size of 40 nm was dispersed at the parts by weight listed in Table 3, and then diethylene glycol in 45 parts by weight was mixed in and this was agitated, yielding a paint. The paint that was obtained was coated on a PEN substrate using an applicator to produce a coated film that was then dried, yielding the gas diffusion electrodes of Comparative Examples 3 and 4, which are porous fluororesin films.

(Measuring Physical Properties and Testing to Confirm Through-hole and Void Flattening)

The weight to unit area and the film thickness (X) of the gas diffusion electrodes of Examples 11 to 21 and Comparative Examples 3 and 4 were measured. The density was calculated from the measured weight, and the void content discussed above was calculated. Then, to confirm the extent of through-hole and void flattening due to hot pressing, hot pressing (120°C, 10 MPa, 10 minutes) was performed on PEN and the film thickness (Y) after hot pressing was measured. (Y/X) $\times$ 100 is listed as the mechanical strength (%).

The physical properties shown in Table 4.

[Table 4]

| | Rate of hole area (%) | Density (g/cm³) | Void content (%) | Film thickness x (μm) | Film thickness after hot pressing y (μm) | Mechanical strength y/x × 100 (%) |
|---|---|---|---|---|---|---|
| Example 11 | 20 | 1.49 | 20.1 | 25.5 | 23.0 | 90.2 |
| Example 12 | 60 | 0.75 | 59.8 | 24.7 | 19.8 | 80.2 |
| Example 13 | 95 | 0.10 | 94.6 | 27.5 | 19.3 | 70.2 |
| Example 14 | 20 | 1.55 | 20.7 | 26.0 | 22.1 | 85.0 |
| Example 15 | 60 | 0.79 | 59.6 | 26.2 | 19.7 | 75.2 |
| Example 16 | 95 | 0.11 | 94.4 | 28.0 | 18.2 | 65.0 |
| Example 17 | 20 | 1.53 | 20.1 | 25.5 | 24.2 | 94.9 |
| Example 18 | 60 | 0.77 | 59.8 | 25.7 | 21.8 | 84.8 |
| Example 19 | 95 | 0.10 | 94.8 | 27.0 | 20.3 | 75.2 |
| Example 20 | 60 | 0.77 | 59.5 | 26.0 | 21.6 | 83.1 |
| Example 21 | 60 | 0.85 | 59.2 | 26.1 | 21.7 | 83.1 |
| Comparative Example 3 | - | 0.29 | 84.5 | 26.0 | 12.7 | 48.8 |
| Comparative Example 4 | - | 0.31 | 83.5 | 27.5 | 12.7 | 46.2 |

In both the Examples and Comparative Examples, the void content was at least 20% and the gas permeability likely is high. In particular, Examples 12, 13, 15, 16, 18, 19, 20, 21, and Comparative Examples 3 and 4 have a void content of at least 55% and have particularly high gas permeability.

As shown in Table 4, the film thickness after hot pressing is extremely thin in Comparative Examples 3 and 4, whereas not as much change is seen in Examples 11 and 21. As far as the mechanical strength, in Examples 11 to 21 the mechanical strength is 65% or more, whereas in Comparative Examples 3 to 4 it is less than 50%. This likely is because the columnar structure is retained in the examples and thus the mechanical strength is maintained and void flattening is prevented.

(Fabrication of the Polymer electrolyte fuel cell)

(1) Polymer electrolyte fuel cell Fabrication Method 1

Two gas diffusion electrodes (with substrate) with 50 mm edges obtained in Examples 11 to 21 and Comparative Examples 3 and 4 were prepared. A catalyst paint made of carbon that supports a platinum catalyst, an ion conducting resin, and a mixed solvent of water and ethanol was applied to the surface of the fluororesin film of the two gas diffusion electrodes and dried to form catalyst layers, yielding gas diffusion electrodes with a catalyst layer. The amount of platinum catalyst in each of these was 0.3 mg/cm². Next, the gas diffusion electrodes with a catalyst layer were disposed on the surfaces of the polymer electrolyte film so that their catalyst layer surface is in contact with a polymer electrolyte film (product name: Nafion 117, made by DuPont) and hot pressed (120°C, 10 MPa, 10 minutes) to join the catalyst layers and the polymer electrolyte film, and then the PEN film substrate used when manufacturing the gas diffusion electrode was stripped away, yielding a membrane-electrolyte assembly. Carbon paper was arranged on both surfaces of the membrane-electrolyte assembly that was obtained, then a graphite separator was disposed outside the carbon paper and this was incorporated into a single cell, yielding a polymer electrolyte fuel cell for evaluation (Examples 11-1 to 21-1, Comparative Examples 3-1 and 4-1). It should be noted that Examples 11-1 to 21-1 are polymer electrolyte fuel cells that employ the gas diffusion electrodes of Examples 11 to 21, respectively, and Comparative Examples 3-1 and 4-1 are polymer electrolyte fuel cells that employ the gas diffusion electrodes of Comparative Examples 3 and 4, respectively.

(2) Polymer electrolyte fuel cell Fabrication Method 2

A catalyst paint made of carbon that supports a platinum catalyst, an ion conducting resin, and a solvent was applied to both surfaces of a polymer electrolyte film (product name: Nafion 117, made by DuPont) and dried to form catalyst layers, yielding a polymer electrolyte film with catalyst layers. The amount of platinum catalyst in each of these was 0.3 mg/cm$^2$. Next, the gas diffusion electrodes (with substrate) obtained in Examples 11 to 21 and Comparative Examples 3 and 4 were disposed so that their gas diffusion electrode surface is in contact with the catalyst layers and hot pressed (120°C, 10 MPa, 10 minutes) to join the catalyst layers and the gas diffusion electrodes, and then the PEN film substrate used when manufacturing the gas diffusion electrode was stripped away, yielding a membrane-electrolyte assembly. Carbon paper was arranged on both surfaces of the membrane-electrolyte assembly that was obtained, then a graphite separator was disposed outside the carbon paper and this was incorporated into a single cell, yielding a polymer electrolyte fuel cell for evaluation (Examples 11-2 to 21-2, Comparative Examples 3-2 and 4-2). It should be noted that Examples 11-2 to 21-2 are polymer electrolyte fuel cells that employ the gas diffusion electrodes of Examples 11 to 21, respectively, and Comparative Examples 3-2 and 4-2 are polymer electrolyte fuel cells that employ the gas diffusion electrodes of Comparative Examples 3 and 4, respectively.

(Evaluating the Polymer electrolyte fuel cells)

The power generation properties of the polymer electrolyte fuel cells (Examples 11-1 to 21-1, Comparative Examples 3-1 and 4-1, Examples 11-2 to 21-2, Comparative Examples 3-2 and 4-2) were evaluated with the following procedure.
As the gasses supplied to the polymer electrolyte fuel cell, hydrogen gas was used on the fuel electrode side and oxygen gas was used on the oxygen electrode side. Hydrogen gas was supplied at a humidity temperature of 85°C, 500 mL/min. and 0.1 MPa, and the oxygen gas was supplied at a humidity temperature of 70°C, 1000 mL/min, and 0.1 MPa. Under these conditions, the voltage was measured at a current density of 1A/cm$^2$.
The results are shown in Table 5.

[Table 5]

| | Voltage (V) | | Voltage (V) |
|---|---|---|---|
| Example 11-1 | 0.64 | Example 11-2 | 0.65 |
| Example 12-1 | 0.68 | Example 12-2 | 0.69 |
| Example 13-1 | 0.71 | Example 13-2 | 0.72 |
| Example 14-1 | 0.64 | Example 14-2 | 0.64 |
| Example 15-1 | 0.65 | Example 15-2 | 0.66 |
| Example 16-1 | 0.67 | Example 16-2 | 0.68 |
| Example 17-1 | 0.64 | Example 17-2 | 0.65 |
| Example 18-1 | 0.67 | Example 18-2 | 0.68 |
| Example 19-1 | 0.69 | Example 19-2 | 0.70 |
| Example 20-1 | 0.69 | Example 20-2 | 0.70 |
| Example 21-1 | 0.68 | Example 21-2 | 0.69 |
| Comparative Example 3-1 | 0.62 | Comparative Example 3-2 | 0.63 |
| Comparative Example 4-1 | 0.61 | Comparative Example 4-2 | 0.62 |

As shown in Table 5, the polymer electrolyte fuel cells of Examples 11-1 to 21-1 and Examples 11-2 to 21-2 have excellent power generation properties, with a higher voltage at a current density of 1 A/cm$^2$ than the polymer electrolyte fuel cells of Comparative Examples 3-1 and 4-1 and Comparative Examples 3-2 and 4-2.
Specifically, in the Examples, the voltage is maintained at 0.64 or above, whereas in the Comparative Examples, the voltage was below 0.63 V.
The gas diffusion electrode of the Embodiment (Second) retains its mechanical strength by providing through-holes in the fluororesin that includes carbon, and specifically acetylene black, so as to achieve a predetermined void content, and thus prevents flooding by humidity water and water generated during operation of the fuel cell, has high gas permeability, and good cell performance.

Of these, the voltage is good at 0.67 V or more in Examples 12-1, 12-2, 13-1, 13-2, 16-1, 16-2, 18-1, 18-2, 19-1, 19-2, 20-1, 20-2, 21-1, and 21-2.

Likely this is because both the mechanical strength and the void content are high values, and thus the cell performance is particularly good.

Comparing Examples 11-1 to 21-1 and Examples 11-2 to 21-2, the voltage tended to be higher in Examples 11-2 to 21-2.

It is conceivable that this is the result of minute changes in the degree of void flattening due to differences in the manufacturing method.

**Claims**

1. A gas diffusion electrode comprising:

   a fluororesin film in which at least carbon material has been dispersed;
   wherein the fluororesin has a plurality of through-holes provided by irradiating a laser on the surface of the fluororesin film or by puncturing the fluororesin film with mechanical means such as a fine needle or drill.

2. The gas diffusion electrode according to claim 1,
   wherein the fluororesin film comprises an olefin fluoride-based resin.

3. The gas diffusion electrode according to claim 1,
   wherein the carbon material comprises at least one of a particulate carbon material and a fibrous carbon material.

4. The gas diffusion electrode according to claim 3,
   wherein the particulate carbon material is carbon black.

5. The gas diffusion electrode according to claim 4,
   wherein the carbon black is acetylene black

6. The gas diffusion electrode according to either claim 1 or 2,
   wherein an rate of hole area of the fluororesin film is in a range of 20% to 95%.

7. The gas diffusion electrode according to claim 1 or 2,
   wherein a density of the fluororesin film is in a range of 0.10 to 1.55 $g/cm^3$.

8. The gas diffusion electrode according to either claim 1 or 2,
   wherein a void content of the fluororesin film is in a range of 20% to 95%.

9. The gas diffusion electrode according to either claim 1 or 2,
   wherein the fluororesin film comprises hydrophilic inorganic microparticles or organic microparticles as filler.

10. The gas diffusion electrode according to either claim 1 or 2,
    wherein a weight ratio of fluororesin and carbon material in the fluororesin film is 1/3 to 10 parts by weight carbon material to one part by weight fluororesin.

11. A gas diffusion electrode according to claim 1 or 2, which further comprises a sheet-shaped conductive porous body on the fluororesin film.

12. A membrane-electrolyte assembly for a polymer electrolyte fuel cell, comprising:

    the gas diffusion electrode according to claim 1 or 2;
    a polymer electrolyte film; and
    a catalyst layer,
    wherein the gas diffusion electrode is provided onto both surfaces of the polymer electrolyte film, with the catalyst layer interposed between each gas diffusion electrode and the polymer electrolyte film.

**13.** A polymer electrolyte fuel cell comprising a separator and the membrane-electrolyte assembly according to claim 12.

**14.** A method of producing a gas diffusion electrode, comprising:

a process of forming a fluororesin film by drying a solution in which carbon material is dispersed in a fluororesin solution; and

a process of providing through-holes in the fluororesin film by irradiating a laser on the surface of the fluororesin film or by puncturing the fluororesin film with mechanical means such as a fine needle or drill.

**15.** A method of producing a membrane-electrolyte assembly, comprising:

the process of producing a gas diffusion electrode according to claim 14;

a process of forming a catalyst layer on the fluororesin film to obtain a gas diffusion electrode with catalyst layer; and

a process of joining the gas diffusion electrode with catalyst layer and a polymer electrolyte film.

**16.** A method of producing a membrane-electrolyte assembly, comprising:

the process of producing a gas diffusion electrode according to claim 14; and

a process of joining the fluororesin films and a polymer electrolyte film with catalyst layers.

**17.** A method of producing a polymer electrolyte fuel cell, comprising:

the process of producing a gas diffusion electrode according to claim 14;

a process of joining the fluororesin films with a catalyst layer, yielding gas diffusion electrodes with catalyst layer;

a process of joining the gas diffusion electrodes with catalyst layer and a polymer electrolyte film, yielding a membrane-electrolyte assembly; and

a process of incorporating the membrane-electrolyte assembly and a separator into a single cell.

**18.** A method of producing a polymer electrolyte fuel cell, comprising:

the process of producing a gas diffusion electrode according to claim 14;

a process of joining the fluororesin films and a polymer electrolyte film with catalyst layers, yielding a membrane-electrolyte assembly; and

a process of incorporating the membrane-electrolyte assembly and a separator into a single cell.

**19.** The production method according to any one of claims 14 to 18,

wherein the process of providing through-holes in the fluororesin film comprises irradiating a laser on the fluororesin film.

**Patentansprüche**

**1.** Gasdiffusionselektrode, mit:

einem Fluorharzfilm, in dem zumindest Kohlenstoffmaterial dispergiert worden ist;

wobei das Fluorharz eine Mehrzahl Durchgangsbohrungen hat, die durch Bestrahlen der Oberfläche des Fluorharzfilms mit einem Laser oder mittels Durchstechen des Fluorharzfilms mit mechanischen Mitteln wie einer feinen Nadel oder einem Bohrer gebildet werden.

**2.** Gasdiffusionselektrode nach Anspruch 1, bei der der Fluorharzfilm ein Harz auf Olefinfluoridbasis aufweist.

**3.** Gasdiffusionselektrode nach Anspruch 1, bei der das Kohlenstoffmaterial mindestens entweder ein Carbonpartikelmaterial oder ein Carbonfasermaterial aufweist.

**4.** Gasdiffusionselektrode nach Anspruch 3, bei der das Carbonpartikelmaterial Ruß ist.

**5.** Gasdiffusionselektrode nach Anspruch 4, bei der der Ruß Acetylenruß ist.

**6.** Gasdiffusionselektrode nach Anspruch 1 oder 2, bei der der Anteil der Lochfläche des Fluorharzfilms im Bereich von 20% bis 95% liegt.

**7.** Gasdiffusionselektrode nach Anspruch 1 oder 2, bei der die Dichte des Fluorharzfilms im Bereich von 0,10 bis 1,55 g/cm$^3$ liegt.

**8.** Gasdiffusionselektrode nach Anspruch 1 oder 2, bei der der Anteil Hohlräume des Fluorharzfilms im Bereich von 20% bis 95% liegt.

**9.** Gasdiffusionselektrode nach Anspruch 1 oder 2, bei der der Fluorharzfilm hydrophile anorganische Mikropartikel oder organische Mikropartikel als Füllstoff aufweist.

**10.** Gasdiffusionselektrode nach Anspruch 1 oder 2, bei der das Gewichtsverhältnis des Fluorharzes und des Kohlenstoffmaterials im Fluorharz 1 : 3 bis zehn Gewichtsteile Kohlenstoffmaterial zu einem Gewichtsteil Fluorharz beträgt.

**11.** Gasdiffusionselektrode nach Anspruch 1 oder 2, die ferner einen schichtförmigen, leitfähigen, porösen Körper auf dem Fluorharzfilm aufweist.

**12.** Membranelektrolyt-Baugruppe für eine Polymer-Elektrolyt-Brennstoffzelle, mit:

der Gasdiffusionselektrode nach Anspruch 1 oder 2;
einem Polymer-Elektrolytfilm; und
einer Katalysatorschicht, bei der
die Gasdiffusionselektrode auf beiden Oberfächen des Polymer-Elektrolytfilms vorgesehen ist, wobei die Katalysatorschicht jeweils zwischen der Gasdiffusionselektrode und dem Polymer-Elektrolytfilm angeordnet ist.

**13.** Polymer-Elektrolyt-Brennstoffzelle, die einen Separator und die Membranelektrolyt-Baugruppe nach Anspruch 12 aufweist.

**14.** Verfahren zum Herstellen einer Gasdiffusionselektrode, das aufweist:

einen Prozess zum Ausbilden eines Fluorharzfilms durch Trocknen einer Lösung, In der Kohlenstoffmaterial in einer Fluorharzlösung dispergiert ist; und
einen Prozess zum Bilden von Durchgangsbohrungen im Fluorharzfilm durch Bestrahlen der Oberfläche des Fluorharzfilms mit einem Laser oder mittels Durchstechen des Fluorharzfilms mit mechanischen Mitteln wie einer feinen Nadel oder einem Bohrer.

**15.** Verfahren zum Herstellen einer Membranelektrolyt-Baugruppe, das aufweist:

den Prozess zur Herstellung einer Gasdiffusionselektrode nach Anspruch 14;
einen Prozess zum Ausbilden einer Katalysatorschicht auf dem Fluorharzfilm, um eine Gasdiffusionselektrode mit Katalysatorschicht zu erhalten; und
einen Prozess zum Verbinden der Gasdiffusionselektrode mit Katalysatorschicht mit einem Elektrolytfilm.

**16.** Verfahren zum Herstellen einer Membranelektrolyt-Baugruppe, das aufweist:

den Prozess zur Herstellung einer Gasdiffusionselektrode nach Anspruch 14; und
einen Prozess zum Verbinden der Fluorharzfilme und eines Polymer-Elektrolytfilms mit Katalysatorschichten.

**17.** Verfahren zum Herstellen einer Polymer-Elektrolyt-Brennstoffzelle, das aufweist:

den Prozess zur Herstellung einer Gasdiffusionselektrode nach Anspruch 14;
einen Prozess zum Verbinden der Fluorharzfilme mit einer Katalysatorschicht und einem Polymer-Elektrolytfilm, wodurch Gasdiffusionselektroden mit Katalysatorschicht erhalten werden;
einen Prozess zum Verbinden der Gasdiffusionselektroden mit Katalysatorschicht und einem Polymer-Elektrolytfilm, wodurch eine Membranelektrolyt-Baugruppe erhalten wird; und
einen Prozess zum Installieren der Membranelektrolyt-Baugruppe und eines Separators in einer einzelnen Zelle.

**18.** Verfahren zum Herstellen einer Polymer-Elektrolyt-Brennstoffzelle, das aufweist:

den Prozess zur Herstellung einer Gasdiffusionselektrode nach Anspruch 14;
einen Prozess zum Verbinden der Fluorharzfilme und eines Polymer-Elektrolytfilm mit Katalysatorschichten, wodurch eine Membranelektrolyt-Baugruppe erhalten wird; und
einen Prozess zum Installieren der Membranelektrolyt-Baugruppe und eines Separators in einer einzelnen Zelle.

**19.** Herstellungsverfahren nach einem der Ansprüche 14 bis 18, bei dem der Prozess der Bildung der Durchgangsbohrungen im Fluorharzfilm die Bestrahlung des Fluorharzfilms mit einem Laser enthält.

**Revendications**

**1.** Électrode de diffusion de gaz, comprenant :

un film de fluororésine dans lequel au moins un matériau carboné a été dispersé ;
**caractérisée en ce que** la fluororésine a une pluralité de trous traversants agencés par irradiation d'un laser sur la surface du film de fluororésine ou par piqûre du film de fluororésine à l'aide de moyens mécaniques tels qu'une fine aiguille ou un forêt.

**2.** Électrode de diffusion de gaz selon la revendication 1,
**caractérisée en ce que** le film de fluororésine comprend une résine à base de fluorure d'oléfine.

**3.** Électrode de diffusion de gaz selon la revendication 1,
**caractérisée en ce que** le matériau carboné comprend au moins un matériau parmi un matériau carboné particulaire et un matériau carboné fibreux.

**4.** Électrode de diffusion de gaz selon la revendication 3,
**caractérisée en ce que** le matériau carboné particulaire est du noir de carbone.

**5.** Électrode de diffusion de gaz selon la revendication 4,
**caractérisée en ce que** le noir de carbone est du noir d'acétylène.

**6.** Électrode de diffusion de gaz selon la revendication 1 ou 2,
**caractérisée en ce que** le pourcentage de surface de trous du film de fluororésine est dans une plage allant de 20 % à 95 %.

**7.** Électrode de diffusion de gaz selon la revendication 1 ou 2,
**caractérisée en ce qu'**une densité du film de fluororésine est dans une plage allant de 0,10 à 1,55 g/cm$^3$.

**8.** Électrode de diffusion de gaz selon la revendication 1 ou 2,
**caractérisée en ce que** la teneur en vides du film de fluororésine est dans une plage allant de 20 % à 95 %.

**9.** Électrode de diffusion de gaz selon la revendication 1 ou 2,
**caractérisée en ce que** le film de fluororésine comprend des microparticules inorganiques hydrophiles ou des microparticules organiques sous forme de charge.

**10.** Électrode de diffusion de gaz selon la revendication 1 ou 2,
**caractérisée en ce que** le rapport de poids de fluororésine et de matériau carboné dans le film de fluororésine est de 1/3 pour 10 parties en poids de matériau carboné sur une partie en poids de fluororésine.

**11.** Électrode de diffusion de gaz selon la revendication 1 ou 2, **caractérisée en ce qu'**elle comporte en outre un corps poreux conducteur sous forme de feuille sur le film de fluororésine.

**12.** Ensemble de membrane-électrolyte pour une pile à combustible à électrolyte polymère, comprenant :

l'électrode de diffusion de gaz selon la revendication 1 ou 2 ;
un film d'électrolyte polymère ; et
une couche de catalyseur,
**caractérisée en ce que** l'électrode de diffusion de gaz est agencée sur les deux surfaces du film d'électrolyte polymère, la couche de catalyseur étant interposée entre chaque électrode de diffusion de gaz et le film d'électrolyte polymère.

13. Pile à combustible à électrolyte polymère **caractérisée en ce qu'**elle comprend un séparateur et l'ensemble membrane-électrolyte selon la revendication 12.

14. Procédé de production d'une électrode de diffusion de gaz, **caractérisé en ce qu'**il comprend :

un traitement de formage d'un film de fluororésine en séchant une solution dans laquelle un matériau carboné est dispersé dans une solution de fluororésine ; et
un traitement d'agencement de trous traversants dans le film de fluororésine par irradiation d'un laser sur la surface du film de fluororésine ou par piqûre du film de fluororésine avec des moyens mécaniques tels qu'une fine aiguille ou un foret.

15. Procédé de production d'un ensemble membrane-électrolyte, **caractérisé en ce qu'**il comprend :

le traitement de production d'une électrode de diffusion de gaz selon la revendication 14 ;
un traitement de formation d'une couche de catalyseur sur le film de fluororésine pour obtenir une électrode de diffusion de gaz ayant une couche de catalyseur ; et
un traitement de liaison de l'électrode de diffusion de gaz ayant la couche de catalyseur et d'un film d'électrolyte polymère.

16. Procédé de production d'un ensemble de membrane-électrolyte, **caractérisé en ce qu'**il comprend :

le traitement de production d'une électrode de diffusion de gaz selon la revendication 14 ; et
un traitement de liaison des films de fluororésine et d'un film d'électrolyte polymère avec des couches de catalyseur.

17. Procédé de production d'une pile à combustible à électrolyte polymère, comprenant :

le traitement de production d'une électrode de diffusion de gaz selon la revendication 14 ;
un traitement de liaison des films de fluororésine avec une couche de catalyseur, aboutissant à des électrodes de diffusion de gaz ayant une couche de catalyseur ;
un traitement de liaison des électrodes de diffusion de gaz ayant une couche de catalyseur et d'un film d'électrolyte polymère, aboutissant à un ensemble de membrane-électrolyte ; et
un traitement d'incorporation de l'ensemble de membrane-électrolyte et d'un séparateur dans une pile unique.

18. Procédé de production d'une pile à combustible à électrolyte polymère, **caractérisé en ce qu'**il comprend :

le traitement de production d'une électrode de diffusion de gaz selon la revendication 14 ;
un traitement de liaison des films de fluororésine et d'un film d'électrolyte polymère avec des couches de catalyseur, aboutissant à un ensemble de membrane-électrolyte ; et
un procédé d'incorporation de l'ensemble membrane-électrolyte et d'un séparateur dans une pile unique.

19. Procédé de production selon l'une quelconque des revendications 14 à 18 **caractérisé en ce que** le traitement d'agencement des trous traversants dans le film de fluororésine consiste à irradier un laser sur le film de fluororésine.

## Fig. 1

# Fig. 2

## Fig. 3

# Fig. 4

Fig. 5

4a
3a
2a
1
2b
3b
4b

Fig. 6

11

10

Fig. 7

11

10

Fig. 8

10  16      15      16  10

11

50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003303595 A
- JP 2000058072 A
- JP 2001057215 A
- WO 9827606 A
- EP 1478041 A